# EUROPÄISCHE PATENTANMELDUNG

(11) **EP 0 919 313 A2**
(43) Veröffentlichungstag der Anmeldung: **02.06.1999**
(21) Anmeldenummer: 98120730.1
(22) Anmeldetag: 31.10.1998
(51) Int. Cl.: B23B 31/30, B23Q 5/58, B25B 5/08, B25B 5/06

(54) **Spanneinrichtung**

(30) Priorität: 25.11.1997 DE 19752084
(71) Anmelder: Röhm GmbH, 89567 Sontheim (DE)
(72) Erfinder: Röhm, Günter Horst, 89567 Sontheim (DE)
(74) Vertreter: Hentrich, Swen Dipl.-Phys. Dr.

(57) **Zusammenfassung**

Die Erfindung betrifft eine Spanneinrichtung an Werkzeugmaschinen mit einem axial unverschiebbaren, mit einer Arbeitsspindel (4) umlaufenden Spannzylinder (3) und einem darin mitumlaufend angeordneten, axial verschiebbaren Spannkolben (2). Der Spannkolben (2) ist mit einer Kolbenwelle (5) verbunden, die eine Spannstange (6) beaufschlägt, die wiederum an dem Futterkolben (22) des Spannfutters (21) angreift. In der Kraftübertragungskette von Kolbenwelle (5), Spannstange (6) und Futterkolben (22) ist ein Kraftsensor (16) angeordnet.

## Beschreibung

Die Erfindung betrifft eine Spanneinrichtung an Werkzeugmaschinen mit einem axial unverschiebbaren, mit einer Arbeitsspindel umlaufenden Spannzylinder und einem darin mitumlaufend angeordneten, axial verschiebbaren Spannkolben, der mit einer Kolbenwelle verbunden ist, die eine Spannstange beaufschlägt, die an dem Futterkolben des Spannfutters angreift.

Bei derartigen, aus der Praxis bekannten Spanneinrichtungen ist es bekannt, mit einer zwei Endschalter aufweisenden Kontrolleinrichtung die Axialverschiebung des Spannkolbens zu überwachen, um eine ungewollte Verschiebbung des Spannkolbens erfassen zu können. Da damit jedoch lediglich die Axialstellung des Spannkolbens erfaßt wird und diese nicht eindeutig mit einer auf die Spannstange ausgeübten Kraft korreliert ist, ist es weiterhin aus dem Stand der Technik bekannt und beispielsweise in der DE 195 39 135 C1 beschrieben, jeder der beiden im Spannzylinder angeordneten Druckkammern einen eigenen Drucksensor zuzuordnen und das Differenzdruck-Signal aus den beiden Druckmessungen der beiden Druckkammern auszuwerten, da nur die Differenz beider Drücke real als Kraft auf die Kolbenstange wirbt. Problematisch ist dabei, daß der interessierende Meßwert nur durch eine Differenzenbildung erhalten wird, da nach der Gaußschen Fehlerfortpflanzung sich der Meßfehler der abgeleiteten Meßgröße sich aus der Wurzel der Summe der Quadrate der absoluten Meßfehler der Einzelgrößen ergibt und dieser so bestimmte, vergrößerte Meßfehler in Relation zu der abgeleiteten, durch Differenz gebildeten Meßgröße zu setzen ist. Dieser Aufbau führt daher prinzipiell zu einer relativ großen Meßungenauigkeit, die den Wert des so erreichten Meßwertes einschränkt.

Aufgabe der Erfindung ist es daher, eine Spanneinrichtung der eingangs genannten Art so auszubilden, daß die real auf den Futterkolben des Spannfutters einwirkende, infolge der Axialverschiebung des Spannkolbens im Spannzylinder erzeugte Kraft möglichst exakt bestimmt werden kann.

Diese Aufgabe wird nach der Erfindung bei einer Spanneinrichtung der eingangs genannten Art dadurch gelöst, daß in der Kraftübertragungskette von Kolbenwelle, Spannspange und Futterkolben ein Kraftsensor angeordnet ist.

Die Erfindung bietet den Vorteil, daß der für die Beurteilung der Sicherheit der Spanneinrichtung relevante Wert, nämlich die Kraft, mit der letztendlich die Backen des Spannfutters verstellt werden, unmittelbar gemessen werden kann und nicht aus anderen Meßgrößen abgeleitet werden muß. Die Messung erfolgt unmittelbar am Ort der Kraftübertragung und nicht am Ort der Krafterzeugung, so daß die Lagerung des Spannkolbens mit der Kolbenwelle nicht das Meßergebnis verfälscht.

Im Rahmen der Erfindung ist vorgesehen, daß der Kraftsensor der Verbindungsstelle von Kolbenwelle und Spannstange zugeordnet ist. Die Wahl der Verbindungsstelle von Kolbenwelle und Spannstange als Ort für den Kraftsensor vermeidet, daß die bestehenden Bauteile selber modifiziert bzw. geteilt werden müssen, um den Kraftsensor aufzunehmen, wobei mit dieser Ortswahl auch in einfacher Weise die Nachrüstung bestehender Spanneinrichtungen möglich ist.

Dabei ist es bevorzugt, daß an dem der Kolbenwelle zugewandten Ende der Spannstange ein Zwischenstück angeordnet ist, zwischen dessen freiem Ende und der Kolbenwelle der Kraftsensor sitzt. Das Zwischenstück bietet die Möglichkeit, daß die aus Zwischenstück und Kolbenwelle mit dazwischen plaziertem Kraftsensor gebildete Einheit in der gleichen Weise wie zuvor die Kolbenwelle an der Spannstange befestigt werden kann, wobei weiterhin infolge der vorliegenden Einheit von Kolbenwelle und Zwischenstück keine vom Betreiber der Spanneinrichtung durchzuführende Kalibrierung des Kraftsensors erfolgen muß, wie dies notwendig wäre, wenn die Kolbenwelle unmittelbar an der Spannstange angreiften würde.

Zweckmäßigerweise ist der Kraftsensor über eine Signalleitung mit einem sich mitdrehenden Sender verbunden, dem ein ortsfester Empfänger zugeordnet ist, um die Information über die Spannkraft aus dem sich drehenden Teil der Spanneinrichtung in den stationären, die Auswerteeinheit und Kontrolleinrichtung umfassenden Teil der Spanneinrichtung übertragen zu können.

Im Rahmen der Erfindung ist weiterhin vorgesehen, daß die Signalleitung in den Wellenkanälen der mit der Kolbenwelle verbundenen Verteilerwelle geführt und der Empfänger im Verteilergehäuse gegenüberliegend zum Sender angeordnet ist. Die Führung der Signalleitung in den Wellenkanälen bietet den Vorteil, daß keine zusätzliche, die Fertigung verteuernde Bearbeitung der Verteilerwelle notwendig ist und keine zusätzlichen Bohrungen oder Nute die Verteilerwelle schwächen.

Nach einer weiteren, bevorzugten Ausführungsform ist vorgesehen, daß der Kraftsensor zwischen der Spannstange und dem Futterkolben angeordnet ist. Bei dieser Wahl des Ortes der Kraftmessung ist der Kraftsensor möglichst nahe am Spannfutter plaziert, auf das letztendlich die Kraft übertragen werden muß, um mit dessen Backen ein Werkstück sicher zu spannen bzw. frei zu geben.

Bei dieser Ausführungsform ist es günstig, wenn der Sender im Spannfutter angeordnet ist, da so lange Signalleitungen vermieden sind.

Im Rahmen der Erfindung ist vorgesehen, daß der Kraftsensor durch einen Piezokristall oder einen Dehnmeßstreifen oder eine Druckkammer gebildet ist.

Im folgenden soll die Erfindung an in der Zeichnung dargestellten Ausführungsbeispielen näher erläutert werden; es zeigen:
- Fig. 1: einen Axialschnitt durch Verteilergehäuse und Spannzylinder der Spanneinrichtung mit zwischen Kolbenwelle und Spannstange angeordnetem Kraftsensor und im Verteilergehäuse angeordneten Sender und Empfänger,
- Fig. 2: eine der Fig. 1 entsprechende Darstellung mit dem Spannzylinder zugeordnetem Sender und Empfänger,
- Fig. 3: ein Axialschnitt durch das Spannfutter der Spanneinrichtung, und
- Fig. 4: eine der Fig. 3 entsprechende Darstellung mit zwischen Spannstange und Futterkolben angeordnetem Kraftsensor.

Die zur Verwendung an einer Werkzeugmaschine vorgesehene Spanneinrichtung weist einen aus Zylindergehäuse 1 und Spannkolben 2 gebildeten Spannzylinder 3 auf, der zusammen mit der Arbeitsspindel 4 der Werkzeugmaschine umläuft. Der Spannkolben 2 ist einstückig mit einer Kolbenwelle 5 verbunden, die an ihrer in der Zeichung rechts dargestellten Seite mit einer Spannstange 6 gekoppelt ist. Die Spanneinrichtung umfaßt weiterhin einen aus Verteilergehäuse 7 und Verteilerwelle 8 gebildeten Verteiler, wobei das Verteilergehäuse 7 die Anschlüsse für das Arbeitsmedium trägt. Die Verteilerwelle 8 ist einstückig mit der Kolbenwelle 5 ausgebildet, so daß sie an der axialen Verschiebung des Spannkolbens 2 und dessen Drehbewegung teilnimmt. Das Verteilergehäuse 7 ist auf der Verteilerwelle 8 mittels Drehlager so gelagert, daß die Verteilerwelle 8 darin umlaufen kann, das Verteilergehäuse 7 selber sich aber nicht dreht. An der axialen Verschiebung von Verteilerwelle 7 und Spannkolben 2 nimmt das Verteilergehäuse 7 teil. Im Ergebnis wird eine Verstellung des Spannkolbens 2 in axialer Richtung unverändert über die Verteilerwelle 8 auf das Verteilergehäuse 7 übertragen, daß somit die selben Axialbewegungen wie der Spannkolben 2 ausführt.

Zur Wegkontrolle der Axialverschiebungen des Spannkolbens 2 ist eine Kontrolleinrichtung vorgesehen, die bei dem in der Zeichung dargestellten Ausführungsbeispiel zwei Endschalter 9 aufweist, die in einem Ausleger 10 gehalten sind, der an dem Verteilergehäuse 7 angeschlossen ist. Jeder der Endschalter 9 ist in einer der axialen Endpositionen des Spannkolbens 2 durch eine Schaltfläche 11 betätigbar, die an einem Ringbund 12 des ortsfesten Spannzylinders 3 ausgebildet ist.

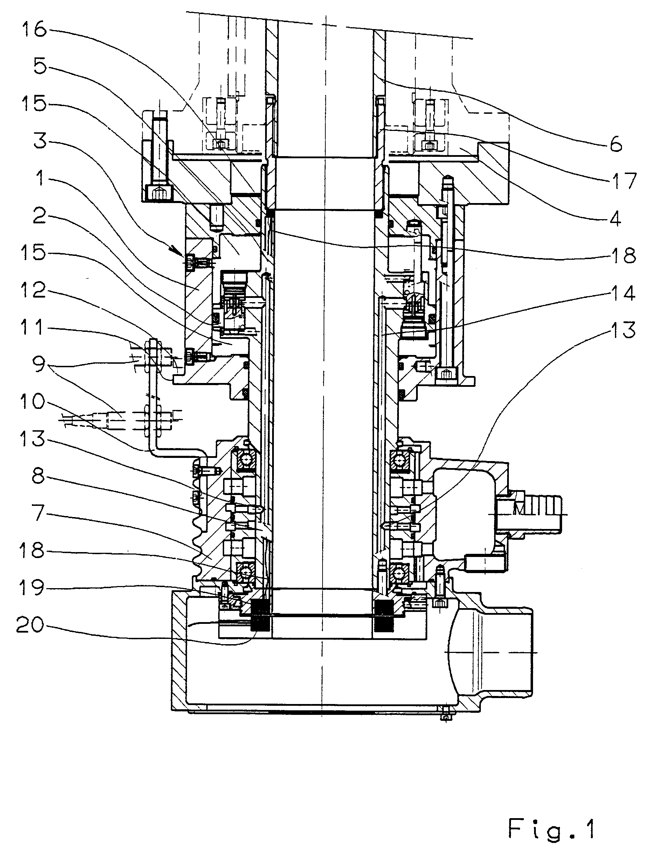

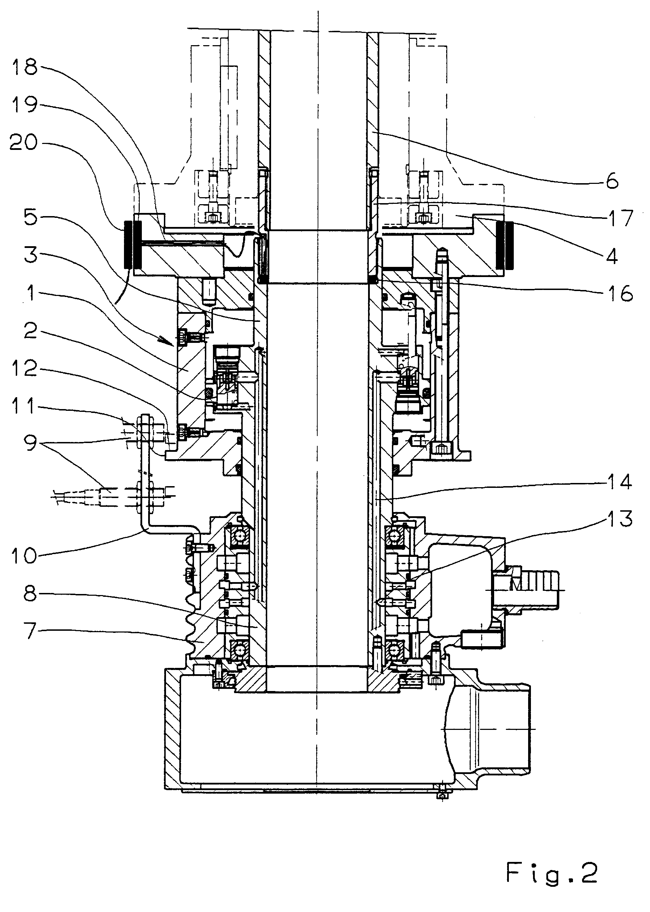

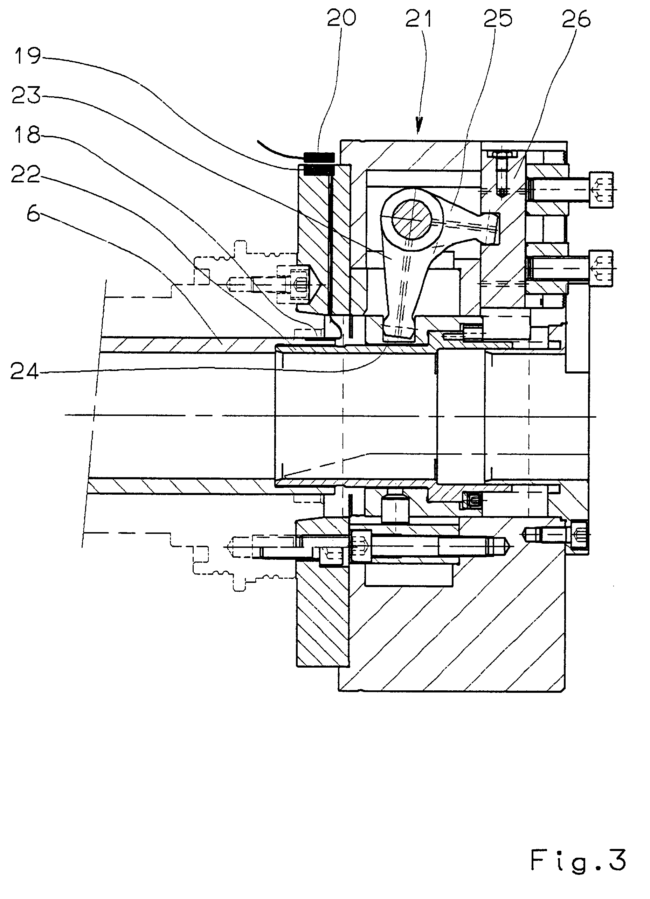

Die auf der Innenseite des Verteilergehäuses 7 umlaufenden Ringnuten 13 dienen zur Zu- und Abführung des Arbeitsmediums durch die Wellenkanäle 14, um die beiden im Spannzylinder 3 ausgebildeten, durch den Spannkolben 2 getrennten Druckkammern 15 wahlweise mit Druck zu beaufschlagen und so den Spannkolben 2 zu verstellen. Durch die Verstellung des Spannkolbens 2 wird eine Zug- bzw. Druckkraft auf die Spannstange 6 übertragen. Die Größe dieser Kraft wird durch einen Kraftsensor 16 gemessen, der in dem in der Fig. 1 dargestellten Ausführungsbeispiel an der Verbindungsstelle von Kolbenwelle 5 und Spannstange 6 angeordnet ist, und zwar zwischen der Kolbenwelle 5 und einem Zwischenstück 17, das in gleicher Weise wie eine keinen Kraftsensor 16 aufweisende Kolbenwelle 5 mit der Spannstange 6 verbunden werden kann. Der Kraftsensor 16 ist über eine Signalleitung 18 mit einem sich mitdrehenden Sender 19 verbunden, dem ein ortsfester Empfänger 20 zugeordnet ist, wobei grundsätzlich der Sender 19 an beliebiger Stelle der sich mitdrehenden Bauteile und der Empfänger 20 gegenüberliegend angeordnet sein kann. Bei dem in der Fig. 1 dargestellen Ausführungsbeispiel sind Sender 19 und Empfänger 20 im Verteilergehäuse 7 angeordnet, wobei der Sender 19 durch die in dem Wellenkanal 14 verlaufende Signalleitung 18 mit dem Kraftsensor 16 verbunden ist. In dem in Fig. 2 gezeigten Ausführungsbeispiel ist der Sender 19 dem Spannzylinder 3, in Fig. 3 dem Spannfutter 21 zugeordnet.

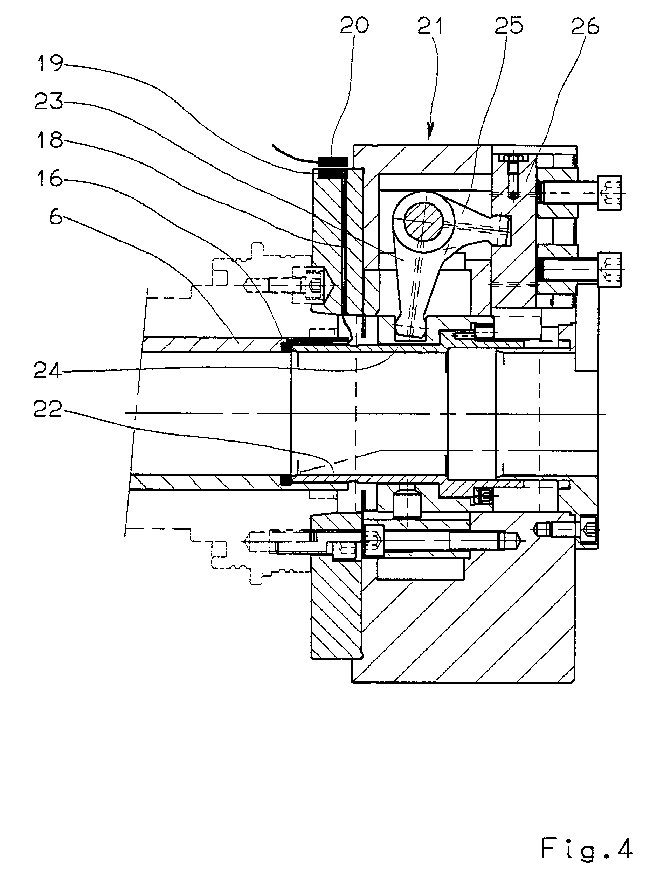

Fig. 4 zeigt ein Ausführungsbeispiel, bei dem der Kraftsensor 16 zwischen der Spannstange 6 und dem Futterkolben 22 angeordnet ist, auf den über die Spannstange 6 vermittelt die Axialverschiebung des Spannkolbens 2 übertragen wird, um über den mit einem Arm 23 in eine Nut 24 des Futterkolbens 22 eingreifenden Winkelhebel 25 die Backe 26 des Spannfutters 21 in radialer Richtung zu verstellen.

Als Kraftsensor 16 ist ein Piezokristall, ein Dehnmeßstreifen oder eine Druckkammer vorgesehen.

## Patentansprüche

1. Spanneinrichtung an Werkzeugmaschinen mit einem axial unverschiebbaren, mit einer Arbeitsspindel (4) umlaufenden Spannzylinder (3) und einem darin mitumlaufend angeordneten, axial verschiebbaren Spannkolben (2), der mit einer Kolbenwelle (5) verbunden ist, die eine Spannstange (6) beaufschlägt, die an dem Futterkolben (22) des Spannfutters (21) angreift, dadurch gekennzeichnet, daß in der Kraftübertragungskette von Kolbenwelle (5), Spannstange (6) und Futterkolben (22) ein Kraftsensor (16) angeordnet ist.

2. Spanneinrichtung nach Anspruch 1, dadurch gekennzeichnet, daß der Kraftsensor (16) der Verbindungsstelle von Kolbenwelle (5) und Spannstange (6) zugeordnet ist.

3. Spanneinrichtung nach Anspruch 2, dadurch gekennzeichnet, daß an dem der Kolbenwelle (5) zugewandten Ende der Spannstange (6) ein Zwischenstück (17) angeordnet ist, zwischen dessen freiem Ende und der Kolbenwelle (5) der Kraftsensor (16) sitzt.

4. Spanneinrichtung nach einem der Ansprüche 1 bis 3, dadurch gekennzeichnet, daß der Kraftsensor (16) über eine Signalleitung (18) mit einem sich mitdrehenden Sender (19) verbunden ist, dem ein ortsfester Empfänger (20) zugeordnet ist.

5. Spanneinrichtung nach Anspruch 4, dadurch gekennzeichnet, daß die Signalleitung (18) in den Wellenkanälen (14) der mit der Kolbenwelle (5) verbundenen Verteilerwelle (8) geführt und der Empfänger (20) im Verteilergehäuse (7) gegenüberliegend zum Sender (19) angeordnet ist.

6. Spanneinrichtung nach Anspruch 4, dadurch gekennzeichnet, daß der Kraftsensor (16) zwischen der Spannstange (6) und dem Futterkolben (22) angeordnet ist.

7. Spanneinrichtung nach Anspruch 8, dadurch gekennzeichnet, daß der Sender (19) im Spannfutter (21) angeordnet ist.

8. Spanneinrichtung nach einem der Ansprüche 1 bis 7, dadurch gekennzeichnet, daß der Kraftsensor (16) durch einen Piezokristall oder einen Dehnmeßstreifen oder eine Druckkammer gebildet ist.
